# EUROPEAN PATENT APPLICATION

(11) **EP 4 318 869 A2**
(43) Date of publication of application: **07.02.2024**
(21) Application number: 23190050.7
(22) Date of filing: 07.08.2023
(51) Int. Cl.: H02J 13/00, H02J 3/00

(54) **SYSTEMS AND METHODS FOR AUTOMATICALLY ASSESSING EVENT RECOVERY IN AN ELECTRICAL SYSTEM**

(30) Priority: 05.08.2022 US 202263395651 P; 09.12.2022 US 202218078446
(71) Applicant: Schneider Electric USA, Inc., Andover, MA 01810 (US)
(72) Inventor: Bickel, Jon A., Murfreesboro TN (US); Peltier, Colton Thomas, Murfreesboro TN (US)
(74) Representative: Manitz Finsterwald Patent- und Rechtsanwaltspartnerschaft mbB

(57) **Abstract**

A method for automatically assessing event recovery in an electrical system includes processing energy-related data from or derived from at least one energy-related signal captured by at least one Intelligent Electronic Device (IED) in the electrical system to identify at least one occurrence of an event in the electrical system. In accordance with some embodiments of this disclosure, the energy-related data associated with the at least one identified event occurrence may be analyzed to determine impact of the event on loads and/or zones associated with the electrical system, and whether recovery from the event has been initiated or started for at least one of the loads and/or zones impacted by the event. At least one load, load type, and/or zone recovering from the event and a recovery profile for the at least one load, load type, and/or zone may be determined.

## Description

### CROSS REFERENCE TO RELATED APPLICATION

This application claims the benefit of and priority to U.S. Provisional Application No. 63/395,651, filed on August 5, 2022, which application was filed under 35 U.S.C. §119(e) and is incorporated by reference herein in its entirety.

### FIELD

This disclosure relates generally to electrical systems, and more particularly, to systems and methods for automatically assessing event recovery in an electrical system.

### BACKGROUND

Today's power monitoring systems and devices are adept at capturing and displaying electrical data associated with the occurrence of electrical events; however, they do not provide useful (or often adequate) information to analyse and/or evaluate the system's recovery from an electrical event. Because each end-user's system is unique, it is difficult to automatically evaluate how a system recovers from events, and therefore, is left to the customer to determine and improve their response performance to electrical events. Unfortunately, most end-users do not maintain event records (other than what is provided by their Electrical Power Monitoring Systems (EPMS)), perform post-event assessments to improve recovery performance, or use standard operating procedures (SOPs) to help facilitate an efficient recovery from an electrical event.

### SUMMARY

Described herein are systems and methods for automatically assessing event recovery in an electrical system. More particularly, in one example implementation, the disclosed systems and methods automatically assess an end-user's response performance to electrical events using analytics, independent of their system's distinctiveness (i.e., with minimal configuration). The systems and methods may baseline/benchmark the end-user's event recovery response performance against their historical response performance or against the typical response performances in similar customer segments, for example. Additionally, the systems and methods may be applicable for discrete zone(s), load(s), process(es) or entire electrical systems as required. The electrical systems may be associated with at least one building, facility, watercraft, aircraft, or other type of structure, for example.

In one aspect of this disclosure, a method for automatically assessing event recovery in an electrical system (e.g., in one or more Intelligent Electronic Devices (IEDs), Edge devices, Cloud-based devices, Gateways, etc.) includes processing energy-related data from or derived from at least one energy-related signal captured by at least lED in the electrical system to identify at least one occurrence of an event in the electrical system. The at least one identified event occurrence may be indicative of an anomalous condition in the electrical system, for example. In accordance with some embodiments of this disclosure, the energy-related data associated with the at least one identified event occurrence may be analyzed to determine impact of the event on loads and/or zones associated with the electrical system, and whether recovery from the event has been initiated or started (or commenced) for at least one of the loads and/or zones impacted by the event. In some example implementations, the energy-related data may further include at least one of digital and/or analog I/O data, user-input data, PLC data, other control signals, etc., as will be appreciated from further discussions below.

In response to determining recovery from the event has been initiated or started for at least one of the loads and/or zones impacted by the event, at least one load, load type, and/or zone recovering from the event and a recovery profile for the at least one load, load type, and/or zone may be determined. Additionally, the recovery profile for at least one of the loads, load types and/or zones and at least one of a load removal, load addition, load change, load type change and zone change (i.e., change within zones) within the electrical system may be tracked, for example, until recovery has met one or more recovery criteria (e.g., recovery is considered complete, satisfactory, prescribed, forced, or recommended time period has been met, etc.).

In accordance with some embodiments of this disclosure, at least one action may be taken or performed during and/or after the recovery from the event has met the recovery criteria, for example, to provide at least one of an indication (e.g., visual and/or audible indication, etc.), optimization or optimization recommendation, and feedback response (e.g., control signal(s), etc.) associated with the recovery from the event. The feedback may include dynamic (real-time) feedback during recovery and/or historical feedback after recovery, for example. In one example implementation, the at least one action may include providing alarms to indicate at least one of: 1) recovery from an event in progress/still in progress, 2) risk of new peak demand during or just after a recovery, 3) load(s) that have or have not been re-energized during recovery, 4) load type(s) that have or have not been re-energized during the recovery, 5) zone(s) which have or have not re-energized during the recovery, 6) excessive recovery time from event, 7) magnitude/amount of load that has been recovered (relative or absolute) with respect to pre-event parameters, etc. The at least one action may be load(s) specific, load type(s) specific, zone(s) specific, event(s) specific, application(s) specific and/or customer(s) specific, for example.

In accordance with some embodiments of this disclosure, at least one of: the load, load type, and/or zone recovering from the event and the recovery profile for each of the loads, load types and/or zones is/are determined by identifying at least one of an new "running mode," an existing "running mode," changes in an existing and/or new "running mode," a temporary "stability," a temporary "instability," and a change in any one or more electrical characteristics and/or control signals associated with the electrical system (e.g., harmonics, active power, status input/output, etc.). Additionally, in accordance with some embodiments of this disclosure, at least one of: the load, load type, and/or zone recovering from the event and the recovery profile for each of the loads, load types, and/or zones is/are determined based on an analysis of one or more types, parameters, and/or behaviors of data, the one or more types of data including time-series data logs, waveform captures, real-time data, I/O data, user input(s), etc. The parameters may include, for example, voltage(s), current(s), power(s), harmonic(s), etc. Additionally, the behaviors may include, for example, measurable changes to the data, characteristics of those changes, etc.

In accordance with some embodiments of this disclosure, the zones may be determined within the electrical system hierarchy based on protection schemes (e.g., each breaker protects a zone, etc.), separately derived sources (e.g., transformers, generators, etc.), processes or subsystems, load types, sub-billing groups or tenants, network communications schemes (e.g., IP addresses, etc.), and/or any other logical classification. Each zone is a subset of the metering system's hierarchy, and each zone may be prioritized by type and each zone may be assigned more than one priority if applicable (e.g., high priority load type with low priority process). For example, if a protective device also acts as an lED and is incorporated into the metering system, it and the devices below it could be considered a zone. If the protective devices are layered in a coordinated scheme, the zones would be similarly layered to correspond with the protective devices.

In accordance with some embodiments of this disclosure, the recovery criteria is considered met in response to at least one of: user feedback indicating the recovery criteria has been met, the recovery profile for at least one load, load type, and/or zone and/or the addition of the load, load type, and/or zone to the electrical system meeting one or more user defined and/or learned thresholds or definitions associated with and/or indicating a recovery, I/O signals from equipment/loads indicating the recovery, a heuristic evaluation, and a statistical evaluation of the recovery profile for each load(s), load type(s), and/or zone(s) and/or the addition of load(s), load type(s) and/or zone(s) to the electrical system indicating the recovery. In accordance with some embodiments of this disclosure, the user defined and/or learned thresholds or definitions associated with and/or indicating a recovery have an associated or prescribed time period/duration. Additionally, in accordance with some embodiments of this disclosure, the statistical evaluation uses at least one of: relatively simple statistical methods (e.g., statistics based on distribution of data, such as standard deviations, percentiles, etc.), more sophisticated time-series analysis methodology (e.g., ARIMA, LSTM, etc.), more advanced shape/signal recognition (e.g., CNN, wavelets, etc.), fixed or dynamic timeboxing or a combination.

In accordance with some embodiments of this disclosure, determining the load(s), load type(s), and/or zone(s) recovering from the event and a recovery profile for each load(s), load type(s), and/or zone(s), may include determining whether one or more loads, load types, and/or zones, or a combination of load(s), load type(s), and/or zone(s), are recovering from the event. Additionally, in accordance with some embodiments of this disclosure, the tracking includes a recovery characteristic, behaviour, and/or parameter such a load(s), load type(s), and/or zone(s) profile, information, status, etc. Energy-related signals and/or data and/or other signals may be evaluated, for example, to characterize load(s), load type(s), and/or zone(s) being added during recovery, order of load(s), load type(s), and/ or zone(s) being re-energized, missing load(s), load type(s), and/or zone(s), comparisons to historically similar event recoveries, comparisons to recovery characteristics and/or baselines from similar or dissimilar market segments, etc.

In accordance with some embodiments of this disclosure, a list of recovery events (e.g., tracking data, load changes, load additions, load removals, zone changes, load or zone status, or other relevant events or inputs, etc.) may be created to improve or optimize one or more recovery parameters and/or facilitate building a standard operating procedure(s) (SOP(s)) for recovery from an event. The SOP(s) may be built, for example, to optimize various objectives such as peak demand reduction, billing reduction, recovery duration/time period, energy consumption during recovery, CO₂ emissions associated with recoveries, specific load or zone improvements, load type changes, technology changes, equipment or system protection, safety improvements, etc.

In accordance with some embodiments of this disclosure, the above method (and the other methods and systems discussed below) may be implemented on one or more waveform capture devices (e.g., lEDs), for example, on the at least one lED responsible for capturing the at least one energy-related signal. Additionally, in some embodiments the above method (and the other methods and systems discussed below) may be implemented partially or fully remote from the at least one IED, for example, in a gateway, a cloud-based system, edge software, a remote server, etc. (which may alternatively be referred to as a "head-end" or "Edge" system herein). Examples of the at least one lED may include a smart utility meter, a power quality meter, and/or another measurement device (or devices). The at least one lED may include breakers, relays, power quality correction devices, uninterruptible power supplies (UPSs), filters, and/or variable speed drives (VSDs), for example. Additionally, the at least one lED may include at least one virtual meter in some embodiments.

It is understood that the at least one captured energy-related signal described in connection with the above method (and the other methods and systems discussed below) may be associated with at least one energy-related waveform capture. For example, in accordance with some embodiments of this disclosure, at least one energy-related waveform capture may be generated from the at least one energy-related signal captured or measured by the at least one lED in the electrical system. According to IEEE Standard 1057-2017, for example, a waveform is "[a] manifestation or representation (e.g., graph, plot, oscilloscope presentation, discrete time series, equations, table of coordinates, or statistical data) or a visualization of a signal." With this definition in mind, at least one energy-related waveform may correspond to a manifestation or representation or a visualization of the at least one captured energy-related signal. It is understood that the above relationship is based on one standards body's (IEEE in this case) definition of a waveform, and other relationships between a waveform and a signal are of course possible, as will be understood by one of ordinary skill in the art.

It is understood that the at least one energy-related signal or waveform captured or measured by the at least one lED discussed above may include, for example, at least one of: a voltage signal, a current signal, input/output (I/O) data, and a derived or extracted value. In some embodiments, the I/O data includes at least one of a digital signal (e.g., two discrete states) and an analog signal (e.g., continuous variable). The digital signal may include, for example, at least one of on/off status(es), open/closed status(es), high/low status(es), synchronizing pulse and any other representative bi-stable signal. Additionally, the analog signal may include, for example, at least one of temperature, pressure, volume, spatial, rate, humidity, and any other physically or user/usage representative signal.

In accordance with some embodiments of this disclosure, the derived or extracted value includes at least one of a calculated, computed, estimated, derived, developed, interpolated, extrapolated, evaluated, and otherwise determined additional energy-related value from at least one of the measured voltage signal and/or the measured current signal. In some embodiments, the derived value additionally or alternatively includes at least one of active power(s), apparent power(s), reactive power(s), energy(ies), harmonic distortion(s), power factor(s), magnitude/direction of harmonic power(s), harmonic voltage(s), harmonic current(s), interharmonic current(s), interharmonic voltage(s), magnitude/direction of interharmonic power(s), magnitude/direction of sub-harmonic power(s), individual phase current(s), phase angle(s), impedance(s), sequence component(s), total voltage harmonic distortion(s), total current harmonic distortion(s), three-phase current(s), phase voltage(s), line voltage(s), spectral analysis and/or other similar/related parameter(s). In some embodiments, the derived value additionally or alternatively includes at least one energy-related characteristic, the energy-related characteristic including magnitude, direction, phase angle, percentage, ratio, level, duration, associated frequency components, energy-related parameter shape, decay rate, and/or growth rate. In accordance with some embodiments of this disclosure, the derived or extracted value may be linked to at least one process, load(s) identification, etc., for example.

It is understood that the at least one energy-related signal or waveform captured or measured by the at least one lED may include (or leverage) substantially any electrical parameter derived from at least one of the voltage and current signals (including the voltages and currents themselves), for example. It is also understood that the at least one energy-related signal or waveform may be continuously or semi-continuously/periodically captured/recorded and/or transmitted and/or logged by the at least one lED.

A system to automatically assessing event recovery in an electrical system (e.g., in one or more IEDs, Edge, Cloud, Gateway, etc.) is also provided herein. In one aspect of this disclosure, the system includes at least one processor and at least one memory device (e.g., local and/or remote memory device) coupled to the at least one processor. The at least one processor and the at least one memory device are configured to process energy-related data from or derived from at least one energy-related signal captured by at least one lED in the electrical system to identify at least one occurrence of an event in the electrical system. The energy-related data associated with the at least one identified event occurrence may be analyzed, for example, to determine impact of the event on loads and/or zones associated with the electrical system, and whether recovery from the event has been initiated or started for at least one of the loads and/or zones impacted by the event. In response to determining recovery from the event has been initiated or started for at least one of the loads and/or zones impacted by the event, at least one load, load type, and/or zone recovering from the event and a recovery profile for the at least one load, load type, and/or zone may be determined.

The recovery profile for at least one of the loads, load types and/or zones and/or at least one of a load removal, load addition, load change, load type change and zone change (i.e., change within zones) within the electrical system may be tracked, for example, until recovery has met one or more recovery criteria (e.g., recovery is forced, considered complete, parameters satisfactorily achieved, prescribed or recommended time period has been met, etc.). Additionally, at least one action may be taken or performed during and/or after the recovery from the event has met the recovery criteria to provide at least one of an indication (e.g., visual and/or audible indication, etc.), optimization or optimization recommendation, and feedback response (e.g., control signal(s), etc.) associated with the recovery from the event.

In some embodiments, the at least one lED capturing the at least one energy-related signal includes at least one metering device. The at least one metering device may correspond, for example, to at least one metering device in the electrical system in which the at least one energy-related signal is being captured/monitored.

As used herein, an lED is a computational electronic device optimized to perform one or more functions. Examples of IEDs may include smart utility meters, power quality meters, microprocessor relays, digital fault recorders, and other metering devices. lEDs may also be imbedded in VSDs, uninterruptible power supplies (UPSs), circuit breakers, relays, transformers, or any other electrical apparatus. lEDs may be used to perform measurement/monitoring and control functions in a wide variety of installations. The installations may include utility systems, industrial facilities, warehouses, office buildings or other commercial complexes, campus facilities, computing co-location centers, data centers, power distribution networks, or any other structure, process or load that uses electrical energy. For example, where the lED is an electrical power monitoring device, it may be coupled to (or be installed in) an electrical power transmission or distribution system and configured to sense/measure and store data (e.g., waveform data, logged data, I/O data, etc.) as electrical parameters representing operating characteristics (e.g., voltage, current, waveform distortion, power, etc.) of the electrical distribution system. These parameters and characteristics may be analyzed by a user to evaluate potential performance, reliability and/or power quality-related issues, for example. The lED may include at least a controller (which in certain lEDs can be configured to run one or more applications simultaneously, serially, or both), firmware, a memory, a communications interface, and connectors that connect the lED to external systems, devices, and/or components at any voltage level, configuration, and/or type (e.g., AC, DC). At least certain aspects of the monitoring and control functionality of an lED may be embodied in a computer program that is accessible by the lED.

In some embodiments, the term "IED" as used herein may refer to a hierarchy of IEDs operating in parallel and/or tandem/series. For example, an lED may correspond to a hierarchy of a plurality of energy meters, power meters, and/or other types of resource meters. The hierarchy may comprise a tree-based hierarchy, such a binary tree, a tree having one or more child nodes descending from each parent node or nodes, or combinations thereof, wherein each node represents a specific lED. In some instances, the hierarchy of IEDs may share data or hardware resources and may execute shared software. It is understood that hierarchies may be non-spatial such as billing hierarchies where IEDs grouped together may be physically unrelated.

It is understood that an input is data that a processor and/or lED (e.g., the above-discussed plurality of lEDs) receives, and an output is data that a processor and/or lED sends. Inputs and outputs may either be digital or analog. The digital and analog signals may be both discrete variables (e.g., two states such as high/low, one/zero, on/off, etc. If digital, this may be a value. If analog, the presence of a voltage/current may be considered by the system/IED as an equivalent signal) or continuous variables (e.g., continuously variable such as spatial position, temperature, pressure voltage, etc.). They may be digital signals (e.g., measurements in an lED coming from a sensor producing digital information/values) and/or analog signals (e.g., measurements in an lED coming from a sensor producing analog information/values). These digital and/or analog signals may include any processing step within the lED (e.g., derive an active power (kW), power factor, a magnitude, a relative phase angle, among all the derived calculations).

Processors and/or lEDs may convert/reconvert digital and analog input signals to a digital representation for internal processing. Processors and/or lEDs may also be used to convert/reconvert internally processed digital signals to digital and/or analog output signals to provide some indication, action, or other response (such as an input for another processor/IED). Typical uses of digital outputs may include signaling relays to open or close breakers or switches, signaling relays to start or stop motors and/or other equipment, and operating other devices and equipment that are able to directly interface with digital signals. Digital inputs are often used to determine the operational status/position of equipment (e.g., is a breaker open or closed, etc.) or read an input synchronous signal from a utility pulsed output. Analog outputs may be used to provide variable control of valves, motors, heaters, or other loads/processes in energy management systems. Finally, analog inputs may be used to gather variable operational data and/or in proportional control schemes.

A few more examples where digital and analog I/O data are leveraged may include (but not be limited to): turbine controls, plating equipment, fermenting equipment, chemical processing equipment, telecommunications, equipment, precision scaling equipment, elevators and moving sidewalks, compression equipment, waste water treatment equipment, sorting and handling equipment, plating equipment temperature/pressure data logging, electrical generation/transmission/distribution, robotics, alarm monitoring and control equipment, as a few examples.

As noted earlier in this disclosure, the at least one energy-related signal captured/measured by the at least one lED may include I/O data. It is understood that the I/O data may take the form of digital I/O data, analog I/O data, or a combination digital and analog I/O data. The I/O data may convey status information, for example, and many other types of information, as will be apparent to one of ordinary skill in the art from discussions above and below.

It is understood that the terms "processor" and "controller" are sometimes used interchangeably herein. For example, a processor may be used to describe a controller. Additionally, a controller may be used to describe a processor.

While the above and below discussed systems and methods describe the at least one energy-related signal as being captured by at least one lED in the electrical system, it is understood that in some example implementations meters, breakers, relays and/or other devices may be used to generate the energy-related signal(s)/waveform capture(s), and/or to collect data that may be used to generate energy-related signal(s)/waveform capture(s), in the electrical system. The energy-related signal(s)/waveform capture(s) may be measurements and recordings of voltage and/or current signals that can be triggered using many methods including: manually, automatically after exceeding one or more parameter threshold(s), periodically (e.g., at 12:00pm daily), initiated or started by an external input (e.g., change in digital status input signal), or by some other means. The energy-related signal(s)/waveform capture(s) may also include other internal/external information such as status input changes, data from other devices, equipment and/or systems.

As will be further appreciated from discussions below, the disclosed systems and methods provide a number of benefits. For example, example benefits provided by automatically assessing event recovery in an electrical system using the systems and methods disclosed herein include:
- Troubleshooting and reconstructing post-event recovery
   ∘ Recovery energy analysis, sequence of load types restarting, potential equipment stressing, etc.
- Reducing post-recovery duration
   ∘ Minimizing post-event energy consumption, emissions reduction, ensure equipment and resource availability, leverage various system inputs (e.g., lEDs, I/O, PLCs, etc.).
- Creating or improving recovery standard operating procedures (SOPs) related to events
   ∘ Allowing end-users to develop SOPs for sequencing, optimizing, and/or improving event recovery.
- Avoidance of new peak demands due to events
   ∘ Evaluating recovery vs. historical billing demand to reduce possibility of exceeding peak demand.
- Providing alarms and information associated with event recovery
   ∘ Providing alarms to indicate recovery in progress, alarms to indicate loads/load types that have not been re-energized, alarms to indicate excessive recovery time, etc.

It is understood that there are many other features, advantages and aspects associated with the disclosed invention, as will be appreciated from the discussions below.

### BRIEF DESCRIPTION OF THE DRAWINGS

The foregoing features of the disclosure, as well as the disclosure itself may be more fully understood from the following detailed description of the drawings, in which:
FIG. 1 shows an example electrical system in accordance with embodiments of the disclosure;
FIG. 2 illustrates example portions of an electrical system in which the invention may be implemented in accordance with embodiments of the disclosure;
FIG. 2A shows an example electrical power monitoring system (EPMS) in accordance with embodiments of this disclosure;
FIG. 3 shows an example intelligent electronic device (IED) that may be used in an electrical system and an EPMS in accordance with embodiments of the disclosure;
FIG. 4 is a flowchart illustrating an example implementation of a method for automatically assessing event recovery in an electrical system; and
FIG. 5 is a plot illustrating an example automated event recovery assessment in accordance with embodiments of this disclosure.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

For convenience, certain introductory concepts and terms used in the specification (and adopted from IEEE Standard 1159-2019) are collected here.

As used herein, the term "periodic event" is used to describe a non-random, non-arbitrary, planned, expected, intentional, or predicable electrical event. A periodic event typically occurs at regular or semi-regular intervals. It is understood that periodic waveforms may not be related to a particular electrical "event". For example, the "steady state" operation of a system will produce waveforms with repeating or recurring values and noise (i.e., periodic waveforms).

As used herein, the term "aperiodic event" is used to describe a random, arbitrary, unplanned, unexpected, unintentional, or unpredicted electrical event (e.g., voltage sag, voltage swell, voltage transient, and even voltage interruption). An aperiodic event typically occurs non-cyclically, arbitrarily or without specific temporal regularity. For the sake of this disclosure, transients and voltage sags are considered to be aperiodic events (i.e., notching is considered as a harmonic phenomenon).

As used herein, the term "transient" is used to describe a deviation of the voltage and/or current from the nominal value with a duration typically less than 1 cycle. Subcategories of transients include impulsive (uni-direction polarity) and oscillatory (bi-directional polarity) transients.

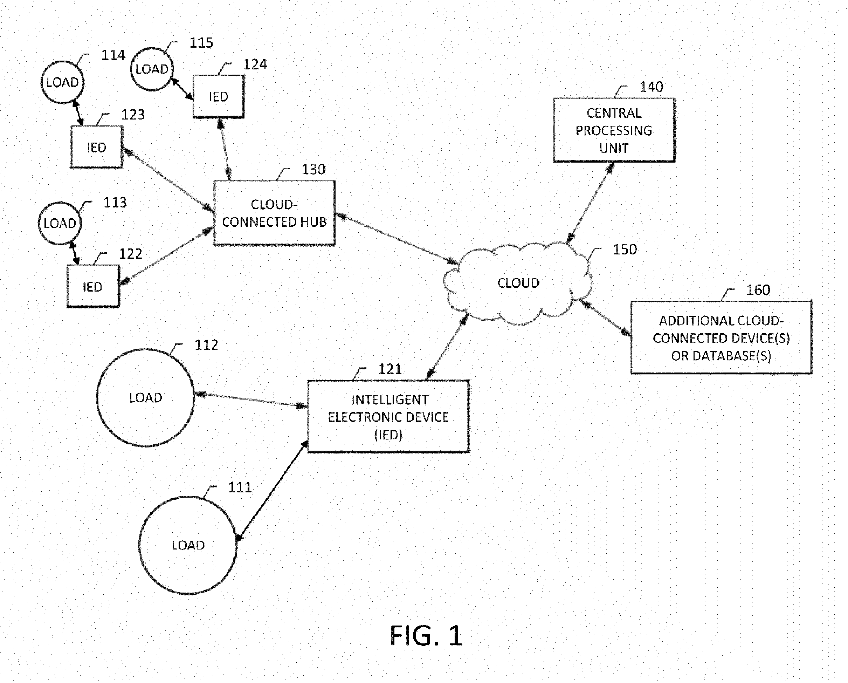

Referring to FIG. 1, an example electrical system in accordance with embodiments of the disclosure includes one or more loads (here, loads 111, 112, 113, 114, 115) (also sometimes referred to herein as "equipment" or "apparatuses") and one or more intelligent electronic devices (lEDs) (here, IEDs 121, 122, 123, 124) capable of sampling, sensing or monitoring one or more parameters (e.g., power monitoring parameters) associated with the loads. In embodiments, the loads 111, 112, 113, 114, 115 and lEDs 121, 122, 123, 124 may be installed in one or more buildings or other physical locations or they may be installed on one or more processes and/or loads within a building. The buildings may correspond, for example, to commercial, industrial or institutional buildings.

As shown in FIG. 1, the lEDs 121, 122, 123, 124 are each coupled to one or more of the loads 111, 112, 113, 114, 115 (which may be located "upline" or "downline" from the lEDs in some embodiments). The loads 111, 112, 113, 114, 115 may include, for example, machinery or apparatuses associated with a particular application (e.g., an industrial application), applications, and/or process(es). The machinery may include electrical or electronic equipment, for example. The machinery may also include the controls and/or ancillary equipment associated with the equipment.

In embodiments, the lEDs 121, 122, 123, 124 may monitor and, in some embodiments, analyze parameters (e.g., energy-related parameters) associated with the loads 111, 112, 113, 114, 115 to which they are coupled. The lEDs 121, 122, 123, 124 may also be embedded within the loads 111, 112, 113, 114, 115 in some embodiments. According to various aspects, one or more of the lEDs 121, 122, 123, 124 may be configured to monitor utility feeds, including surge protective devices (SPDs), trip units, active filters, lighting, IT equipment, motors, and/or transformers, which are some examples of loads 111, 112, 113, 114, 115, and the lEDs 121, 122, 123, 124, and may detect ground faults, voltage sags, voltage swells, momentary interruptions and oscillatory transients, as well as fan failure, temperature, arcing faults, phase-to-phase faults, shorted windings, blown fuses, and harmonic distortions, which are some example parameters that may be associated with the loads 111, 112, 113, 114, 115. The lEDs 121, 122, 123, 124 may also monitor devices, such as generators, including input/outputs (I/Os), protective relays, battery chargers, and sensors (for example, water, air, gas, steam, levels, accelerometers, flow rates, pressures, and so forth).

According to another aspect, the lEDs 121, 122, 123, 124 may detect overvoltage, undervoltage, or transient overvoltage conditions, as well as other parameters such as temperature, including ambient temperature. According to a further aspect, the lEDs 121, 122, 123, 124 may provide indications of monitored parameters and detected conditions that can be used to control the loads 111, 112, 113, 114, 115 and other equipment in the electrical system in which the loads 111, 112, 113, 114 and lEDs 121, 122, 123, 124 are installed. A wide variety of other monitoring and/or control functions can be performed by the lEDs 121, 122, 123, 124, and the aspects and embodiments disclosed herein are not limited to lEDs 121, 122, 123, 124 operating according to the above-mentioned examples.

It is understood that the lEDs 121, 122, 123, 124 may take various forms and may each have an associated complexity (or set of functional capabilities and/or features). For example, lED 121 may correspond to a "basic" IED, lED 122 may correspond to an "intermediate" IED, and lED 123 may correspond to an "advanced" lED. In such embodiments, intermediate lED 122 may have more functionality (e.g., energy measurement features and/or capabilities) than basic lED 121, and advanced lED 123 may have more functionality and/or features than intermediate lED 122. For example, in embodiments lED 121 (e.g., an lED with basic capabilities and/or features) may be capable of monitoring instantaneous voltage, current energy, demand, power factor, averages values, maximum values, instantaneous power, and/or long-duration rms variations, and lED 123 (e.g., an lED with advanced capabilities) may be capable of monitoring additional parameters such as voltage transients, voltage fluctuations, frequency slew rates, harmonic power flows, and discrete harmonic components, all at higher sample rates, etc. It is understood that this example is for illustrative purposes only, and likewise in some embodiments an lED with basic capabilities may be capable of monitoring one or more of the above energy measurement parameters that are indicated as being associated with an lED with advanced capabilities. It is also understood that in some embodiments the lEDs 121, 122, 123, 124 each have independent functionality.

In the example embodiment shown, the lEDs 121, 122, 123, 124 are communicatively coupled to a central processing unit 140 via the "cloud" 150. In some embodiments, the lEDs 121, 122, 123, 124 may be directly communicatively coupled to the cloud 150, as lED 121 is in the illustrated embodiment. In other embodiments, the lEDs 121, 122, 123, 124 may be indirectly communicatively coupled to the cloud 150, for example, through an intermediate device, such as a cloud-connected hub 130 (or a gateway), as lEDs 122, 123, 124 are in the illustrated embodiment. The cloud-connected hub 130 (or the gateway) may, for example, provide the lEDs 122, 123, 124 with access to the cloud 150 and the central processing unit 140. It is understood that not all lED's have a connection with (or are capable of connecting with) the cloud 150 (directly or non-directly). In embodiments is which an lED is not connected with the cloud 150, the lED may be communicating with a gateway, edge software or possibly no other devices (e.g., in embodiments in which the lED is processing data locally).

As used herein, the terms "cloud" and "cloud computing" are intended to refer to computing resources connected to the Internet or otherwise accessible to lEDs 121, 122, 123, 124 via a communication network, which may be a wired or wireless network, or a combination of both. The computing resources comprising the cloud 150 may be centralized in a single location, distributed throughout multiple locations, or a combination of both. A cloud computing system may divide computing tasks amongst multiple racks, blades, processors, cores, controllers, nodes or other computational units in accordance with a particular cloud system architecture or programming. Similarly, a cloud computing system may store instructions and computational information in a centralized memory or storage, or may distribute such information amongst multiple storage or memory components. The cloud system may store multiple copies of instructions and computational information in redundant storage units, such as a RAID array.

The central processing unit 140 may be an example of a cloud computing system, or cloud-connected computing system. In embodiments, the central processing unit 140 may be a server located within buildings in which the loads 111, 112, 113, 114, 115, and the lEDs 121, 122, 123, 124 are installed, or may be remotely-located cloud-based service. The central processing unit 140 may include computing functional components similar to those of the lEDs 121, 122, 123, 124 is some embodiments, but may generally possess greater numbers and/or more powerful versions of components involved in data processing, such as processors, memory, storage, interconnection mechanisms, etc. The central processing unit 140 can be configured to implement a variety of analysis techniques to identify patterns in received measurement data from the lEDs 121, 122, 123, 124, as discussed further below. The various analysis techniques discussed herein further involve the execution of one or more software functions, algorithms, instructions, applications, and parameters, which are stored on one or more sources of memory communicatively coupled to the central processing unit 140. In certain embodiments, the terms "function", "algorithm", "instruction", "application", or "parameter" may also refer to a hierarchy of functions, algorithms, instructions, applications, or parameters, respectively, operating in parallel and/or tandem. A hierarchy may comprise a tree-based hierarchy, such a binary tree, a tree having one or more child nodes descending from each parent node, or combinations thereof, wherein each node represents a specific function, algorithm, instruction, application, or parameter.

In embodiments, since the central processing unit 140 is connected to the cloud 150, it may access additional cloud-connected devices or databases 160 via the cloud 150. For example, the central processing unit 140 may access the Internet and receive information such as weather data, utility pricing data, or other data that may be useful in analyzing the measurement data received from the lEDs 121, 122, 123, 124. In embodiments, the cloud-connected devices or databases 160 may correspond to a device or database associated with one or more external data sources. Additionally, in embodiments, the cloud-connected devices or databases 160 may correspond to a user device from which a user may provide user input data. A user may view information about the lEDs 121, 122, 123, 124 (e.g., lED manufacturers, models, types, etc.) and data collected by the lEDs 121, 122, 123, 124 (e.g., energy usage statistics) using the user device. Additionally, in embodiments the user may configure the lEDs 121, 122, 123, 124 using the user device.

In embodiments, by leveraging the cloud-connectivity and enhanced computing resources of the central processing unit 140 relative to the lEDs 121, 122, 123, 124, sophisticated analysis can be performed on data retrieved from one or more lEDs 121, 122, 123, 124, as well as on the additional sources of data discussed above, when appropriate. This analysis can be used to dynamically control one or more parameters, processes, conditions or equipment (e.g., loads) associated with the electrical system.

In embodiments, the parameters, processes, conditions or equipment are dynamically controlled by a control system associated with the electrical system. In embodiments, the control system may correspond to or include one or more of the lEDs 121, 122, 123, 124 in the electrical system, central processing unit 140 and/or other devices within or external to the electrical system.

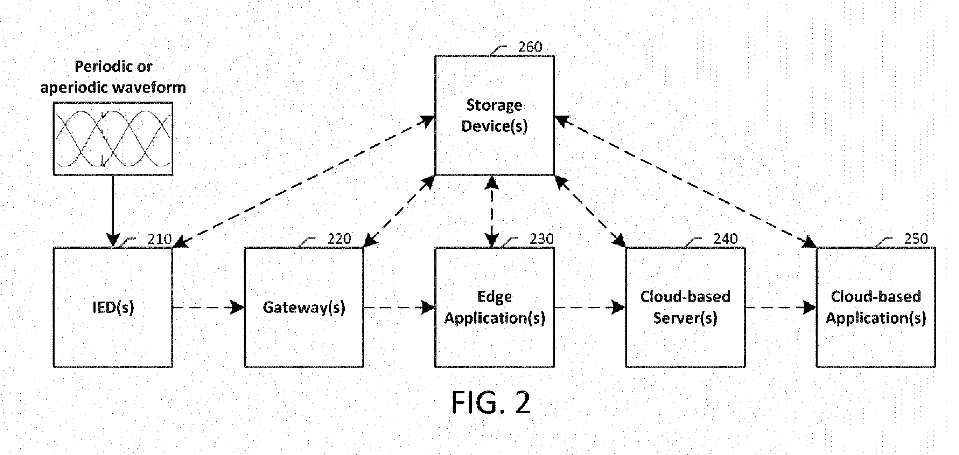

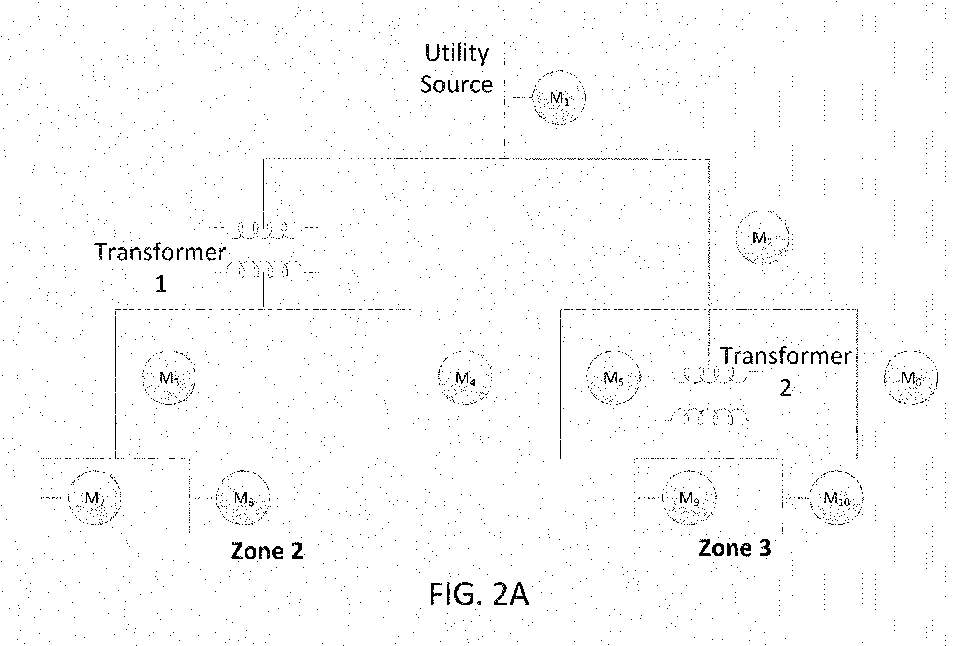

Referring to FIGS. 2 and 2A, FIG. 2 illustrates example portions of an electrical system in which the invention may be implemented in accordance with embodiments of the disclosure. Additionally, FIG. 2A shows an example electrical power monitoring system (EPMS) in accordance with embodiments of this disclosure, for example, for capturing and analyzing data (e.g., energy-related data). As illustrated in FIG. 2A, EPMSs often incorporate a diverse array of IEDs that are installed throughout an electrical system, such as the electrical system shown in FIG. 1. These lEDs may have different levels of capabilities and feature sets; some more and some less. For example, energy consumers often install high-end (many/most capabilities) lEDs at the location where electrical energy enters their premises (M₁ in FIG. 2A). This is done to acquire the broadest understanding possible of the electrical signals' quality and quantity as received from the source (typically, the utility). Because the budget for metering is usually fixed and the energy consumer often wants to meter as broadly as possible across their electrical system, conventional wisdom stipulates using lEDs with progressively lower capabilities as the installed meter points get closer to the loads. In short, the majority of facilities incorporate many more low/mid-range lEDs than high-end lEDs.

"High-end" metering platforms (and some "mid-range" metering platforms) are more expensive and generally capable of capturing PQ phenomena including high-speed voltage events. "Low-end" metering platforms are less expensive and generally have reduced processor bandwidth, sample rates, memory, and/or other capabilities as compared to high-end lEDs. The emphasis of low-end lEDs, including energy measurements taken in most breakers, UPSs, VSDs, etc., is typically energy consumption or other energy-related functions, and perhaps some very basic power quality phenomena (e.g., steady-state quantities such as imbalance, overvoltage, undervoltage, etc.). In short, the EPMS shown in FIG. 2A may include a variety of lEDs and may be configured to monitor one or more aspects of an electrical system.

In accordance with some embodiments of this disclosure, energy-related signals/waveforms captured by lEDs in an electrical system may be analyzed substantially anywhere, for example, including in at least one lED responsible for capturing the energy-related signals/waveforms. For example, as shown in FIG. 2, captured energy-related waveforms can be analyzed on at least one lED 210, at least one gateway 220, at least one edge application 230, at least one cloud-based server 240, at least one cloud-based application 250 and/or at least one storage means 260. It is understood that the analysis may occur in one or more additional or alternative systems and devices other than those shown in FIG. 2. For example, while the system illustrated in FIG. 2 is shown as including at least one gateway 220, it is understood that in some instances the system may not include the at least one gateway 220. It is understood that in accordance with various aspects of this disclosure, the focus of the disclosed invention is on automatically assessing event recovery in an electrical system itself; not so much where it occurs.

In accordance with some embodiments of this disclosure, the at least one lED 210 shown in FIG. 2 is configured to capture/generate one or more energy-related signals/waveforms in the electrical system from voltage and/or current signals. For example, the at least one lED 210 may include at least one voltage and/or current measurement device configured to measure the voltage and/or current signals in the electrical system, and the at least one lED 210 may generate one or more energy-related signals/waveform captures (e.g., WFCs, as shown in FIG. 2) from or using the measured voltage and/or current signals. It is understood that during normal operation of an EPMS, numerous energy-related signals/waveform captures may be captured by multiple devices (e.g., at least one lED 210).

As illustrated in FIG. 2, the energy-related signals/waveform captures may be processed, stored, etc. on or using one or more of the at least one lED 210, the at least one gateway 220, the at least one edge application 230, the at least one cloud-based server 240, the at least one cloud-based application 250 and the at least one storage means 260. It is understood that the at least one storage means 260 may be located at any point in the system. For example, the at least one storage means 260 may be provided in, or be associated with, at least one of the at least one lED 210, the at least one gateway 220, the at least one edge application 230, the at least one cloud-based server 240, and the at least one cloud-based application 250 in some embodiments. It is understood that the at least one storage means 260 may additionally or alternatively be provided as or correspond to a storage means that is separate from the at least one lED 210, the at least one gateway 220, the at least one edge application 230, the at least one cloud-based server 240, and the at least one cloud-based application 250.

Additional aspects of capturing and analyzing energy-related signals/waveforms, for example, to automatically assess event recovery in an electrical system, will be appreciated from further discussions below.

It is understood that specific applications may use all of the elements, additional elements, different elements, or fewer elements shown in FIG. 2 and other figures to provide the same or similar results. For example, in one example implementation an EPMS in accordance with embodiments of this disclosure may not employ a gateway (e.g., 220) and/or cloud-based connection (e.g., to cloud-based server(s) and/or cloud-based application(s) such as 240, 250). Instead, the EPMS may choose to interconnect at least one lED (e.g., 210) with an Edge application (e.g., 240) via an Ethernet Modbus/TCP interconnection, for example.

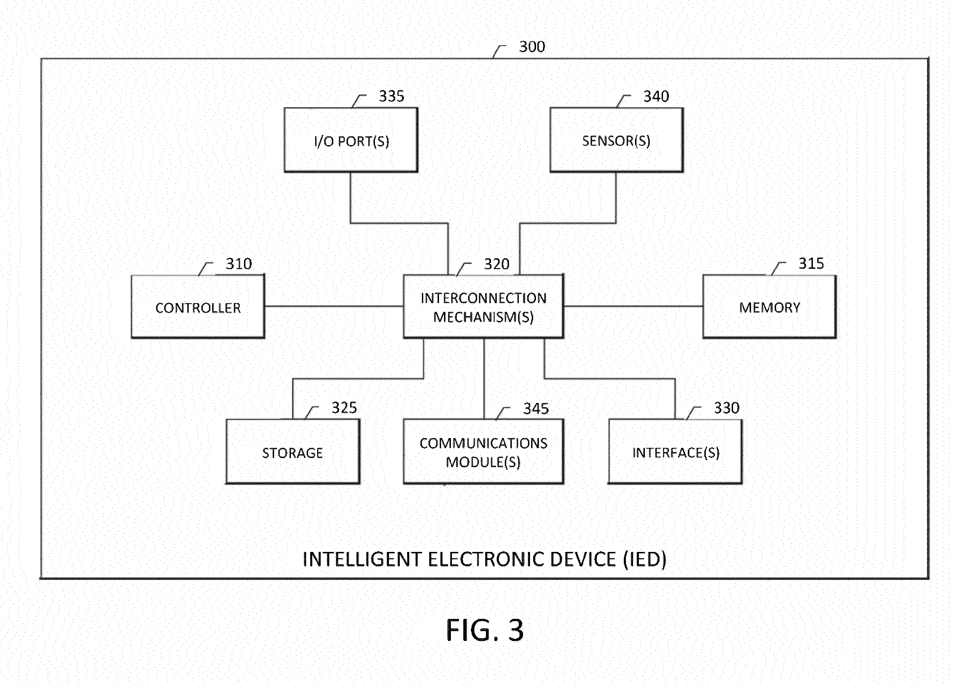

Referring to FIG. 3, an example lED 300 that may be suitable for use in the electrical system shown in FIG. 1, and/or the EPMS shown in FIG. 2, for example, to capture, process, store, etc. energy-related signals/waveform captures, includes a controller 310, a memory device 315, storage 325, and an interface 330. The lED 300 also includes an input-output (I/O) port 335, a sensor 340, a communication module 345, and an interconnection mechanism 320 for communicatively coupling two or more lED components 310-345.

The memory device 315 may include volatile memory, such as DRAM or SRAM, for example. The memory device 315 may store programs and data collected during operation of the lED 300. For example, in embodiments in which the lED 300 is configured to monitor or measure one or more electrical parameters associated with one or more loads (e.g., 111, shown in FIG. 1) in an electrical system, the memory device 315 may store the monitored electrical parameters.

The storage system 325 may include a computer readable and writeable nonvolatile recording medium, such as a disk or flash memory, in which signals are stored that define a program to be executed by the controller 310 or information to be processed by the program. The controller 310 may control transfer of data between the storage system 325 and the memory device 315 in accordance with known computing and data transfer mechanisms. In embodiments, the electrical parameters monitored or measured by the lED 300 may be stored in the storage system 325.

The I/O port 335 can be used to couple loads (e.g., 111, shown in FIG. 1) to the lED 300, and the sensor 340 can be used to monitor or measure the electrical parameters associated with the loads. The I/O port 335 can also be used to coupled external devices, such as sensor devices (e.g., temperature and/or motion sensor devices) and/or user input devices (e.g., local or remote computing devices) (not shown), to the lED 300. The external devices may be local or remote devices, for example, a gateway (or gateways). The I/O port 335 may further be coupled to one or more user input/output mechanisms, such as buttons, displays, acoustic devices, etc., to provide alerts (e.g., to display a visual alert, such as text and/or a steady or flashing light, or to provide an audio alert, such as a beep or prolonged sound) and/or to allow user interaction with the lED 300.

The communication module 345 may be configured to couple the lED 300 to one or more external communication networks or devices. These networks may be private networks within a building in which the lED 300 is installed, or public networks, such as the Internet. In embodiments, the communication module 345 may also be configured to couple the lED 300 to a cloud-connected hub (e.g., 130, shown in FIG. 1), or to a cloud-connected central processing unit (e.g., 140, shown in FIG. 1), associated with an electrical system including lED 300.

The lED controller 310 may include one or more processors that are configured to perform specified function(s) of the lED 300. The processor(s) can be a commercially available processor, such as the well-known PentiumTM, CoreTM, or AtomTM class processors available from the Intel Corporation. Many other processors are available, including programmable logic controllers. The lED controller 310 can execute an operating system to define a computing platform on which application(s) associated with the lED 300 can run.

In embodiments, the electrical parameters monitored or measured by the lED 300 may be received at an input of the controller 310 as lED input data, and the controller 310 may process the measured electrical parameters to generate lED output data or signals at an output thereof. In embodiments, the lED output data or signals may correspond to an output of the lED 300. The lED output data or signals may be provided at I/O port(s) 335, for example. In embodiments, the lED output data or signals may be received by a cloud-connected central processing unit, for example, for further processing (e.g., to identify, track and analyze power quality events), and/or by equipment (e.g., loads) to which the lED is coupled (e.g., for controlling one or more parameters associated with the equipment, as will be discussed further below). In one example, the lED 300 may include an interface 330 for displaying visualizations indicative of the lED output data or signals and/or for selecting configuration parameters (e.g., waveform capture and/or compression parameters) for the lED 300. The interface 330 may correspond to a graphical user interface (GUI) in embodiments.

Components of the lED 300 may be coupled together by the interconnection mechanism 320, which may include one or more busses, wiring, or other electrical connection apparatus. The interconnection mechanism 320 may enable communications (e.g., data, instructions, etc.) to be exchanged between system components of the lED 300.

It is understood that lED 300 is but one of many potential configurations of IEDs in accordance with various aspects of the disclosure. For example, lEDs in accordance with embodiments of the disclosure may include more (or fewer) components than lED 300. Additionally, in embodiments one or more components of lED 300 may be combined. For example, in embodiments memory 315 and storage 325 may be combined.

It is understood that waveform captures (WFCs), such as may be captured by lED 300, for example, are high-speed measurements and recordings of voltage and/or current signals that can be triggered using many methods including: manually, automatically after exceeding one or more parameter threshold(s), periodically (e.g., at 12:00pm daily), initiated or started by an external input (e.g., change in digital status input signal), or by some other means. The invention disclosed herein, as will be appreciated from further discussions below, automatically analyzes energy-related signals/waveform captures to assess event recovery in an electrical system.

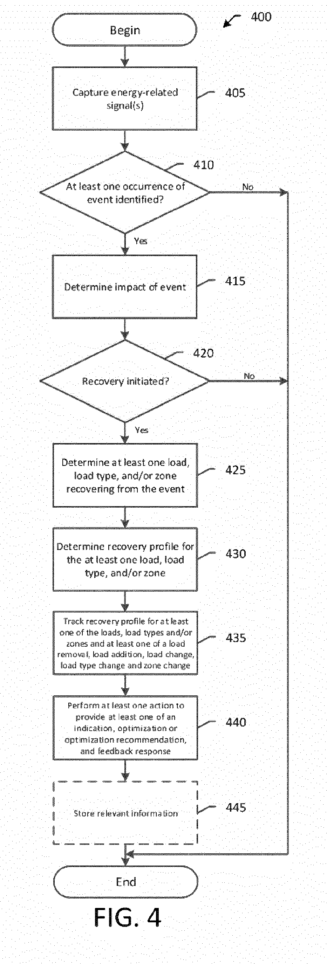

Referring to FIG. 4, a flowchart (or flow diagram) is shown to illustrate an example method (here, method 400) of the disclosure relating to automatically assessing event recovery in an electrical system. Rectangular elements (typified by element 405 in FIG. 4), as may be referred to herein as "processing blocks," may represent computer software and/or lED algorithm instructions or groups of instructions. Diamond shaped elements (typified by element 410 in FIG. 4), as may be referred to herein as "decision blocks," represent computer software and/or lED algorithm instructions, or groups of instructions, which affect the execution of the computer software and/or lED algorithm instructions represented by the processing blocks. The processing blocks and decision blocks (and other blocks shown) can represent steps performed by functionally equivalent circuits such as a digital signal processor circuit or an application specific integrated circuit (ASIC).

The flowchart does not depict the syntax of any particular programming language. Rather, the flowchart illustrates the functional information one of ordinary skill in the art requires to fabricate circuits or to generate computer software to perform the processing required of the particular apparatus. It should be noted that many routine program elements, such as initialization of loops and variables and the use of temporary variables are not shown. It will be appreciated by those of ordinary skill in the art that unless otherwise indicated herein, the particular sequence of blocks described is illustrative only and can be varied. Thus, unless otherwise stated, the blocks described below are unordered; meaning that, when possible, the blocks can be performed in any convenient or desirable order including that sequential blocks can be performed simultaneously (e.g., run parallel on multiple processors and/or multiple IEDs) and vice versa. Additionally, the order/flow of the blocks may be rearranged/interchanged in some cases as well. It will also be understood that various features from the flowchart described below may be combined in some embodiments. Thus, unless otherwise stated, features from the flowchart described below may be combined with other contemplated features, for example, to capture the various advantages and aspects of systems and methods associated with automatically assessing event recovery in an electrical system sought to be protected by this disclosure. It is also understood that various features from the flowchart described below may be separated in some embodiments. For example, while the flowchart illustrated in FIG. 4 is shown having many blocks, in some embodiments the illustrated method shown by this flowchart may include fewer blocks or steps.

Referring to FIG. 4, a flowchart illustrates an example method 400 for automatically assessing event recovery in an electrical system. Method 400 may be implemented, for example, on a processor of at least one lED (e.g., 121, shown in FIG. 1) in the electrical system and/or remote from the at least one IED, for example, in at least one of: a cloud-based system, on-site/edge software, a gateway, or another head-end system.

As illustrated in FIG. 4, the method 400 begins at block 405, where at least one energy-related signal is captured/measured using at least one lED in the electrical system. The at least one lED may be installed or located, for example, at a respective metering point of a plurality of metering points in the electrical system. In some embodiments, the at least one lED may be coupled to one or more loads/equipment/apparatuses (e.g., induction motors) in the electrical system, and the energy-related signal(s) captured by the at least one lED may be associated with the operation of the loads/equipment/apparatuses to which the at least one lED is coupled. The energy-related signal(s) may also be associated with a particular zone or zone(s) in the electrical system. The energy-related signal(s) may include, for example, at least one of: a voltage signal, a current signal, input/output (I/O) data, and a derived or extracted value. In some embodiments, the I/O data includes at least one of a digital signal (e.g., two discrete states) and an analog signal (e.g., continuous variable). Other example types of energy-related signal(s) are noted in the Summary section of this disclosure.

It is understood that the at least one energy-related signal capture may be initiated or started automatically, semi-automatically and/or in response to user-input (e.g., a manual trigger) in some embodiments, or initiated or started by exceeding the threshold of some parameter. For example, the at least one lED may be configured to take or perform periodic and/or aperiodic signal/waveform captures. In accordance with some embodiments of this disclosure, waveform captures are grouped into one of two categories: "aperiodic" and "periodic" waveform captures. Aperiodic waveform captures come from at least one of a random, arbitrary, unplanned, unexpected, unintentional, or unpredicted event (e.g., voltage sag, voltage swell, voltage transient, and even voltage interruption), often using determined or pre-determined thresholds to trigger the capture, of voltage and/or current signal(s). They may also be triggered by external inputs such as I/O status changes, crossing the thresholds of one or more external sensors, or by some other arbitrary or pseudo-arbitrary condition. Periodic waveform captures come from at least one of a non-random, non-arbitrary, planned, expected, timed, intentional, or predicable actions to request, induce, generate or force a steady-state waveform capture of the voltage and/or current signal(s).

At block 410, energy-related data from or derived from the at least one energy-related signal/waveform measured or captured at block 405 is processed, and it is determined whether at least one occurrence of an event in the electrical system has been identified. Characteristics and/or behaviors (e.g., most relevant and/or important characteristics and/or behaviors) suitable for identifying the at least one identified event occurrence include at least one of: severity (magnitude), duration, power quality type (e.g., sag, swell, interruption, oscillatory transient, impulsive transient, etc.), time of occurrence, phases affected, process(es) involved, location, devices impacted, relative or absolute impact, recovery time, periodicity of the event or event type, etc. Additional examples of relevant characteristics and/or behaviors may include, for example, at least one of: information about activities occurring before, during, or after the event, such as a measured load change correlating with the event, or a particular load or apparatus switching on or off before, during or after the event. In some embodiments, the information about the event may be extracted from portions of the electrical measurement data taken prior to a start time of the event, and from portions of the electrical measurement data taken after a conclusion of the event (e.g., the voltage signal returning to a normal value). Additionally, in some embodiments the information about the event may be extracted from portions of the electrical measurement data taken during the event. Frequency components; sag type; phase(s) impacted; phase angle; a combination of the magnitude, the duration, the associated frequency components, the sag type with associated phase angle(s); and other relevant information associated with the at least one captured energy-related signal may also be suitable for identifying the at least one identified event occurrence.

In accordance with some embodiments of this disclosure, the at least one identified event occurrence is indicative of at least one anomalous condition in the electrical system. As will be further appreciated from discussions below, the at least one anomalous condition may result in load loss, equipment failure, etc. in the electrical system. In some example implementations or situations, the at least one anomalous condition may include a power quality event. The power quality event may include, for example, at least one of: a voltage sag, a voltage swell, and a voltage transient. The power quality event may be characterized, for example, based on the definitions set forth in IEEE Standard 1159-2019 (or alternatively other versions of this standard). It is understood that IEEE Standard 1159-2019 is one standards body's (IEEE in this case) way of defining/characterizing power quality events. It is understood there are other standards that define power quality categories/events as well, such as the International Electrotechnical Commission (IEC), American National Standards Institute (ANSI), etc., which may have different descriptions or power quality event types, characteristics, and terminology. In some embodiments, power quality events may be customized power quality events (e.g., defined by a user).

It is understood that the energy-related data processed to identify the at least one occurrence of an event in the electrical system may include other types of data in addition to the data from or derived from the at least one energy-related signal measured or captured at block 405 in some instances. For example, it is contemplated that the energy-related data may further include at least one of I/O data, user-input data, PLC data, etc., with one or more of these types of data being used to identify the at least one occurrence of an event in the electrical system.

At block 410, if it is determined that at least one occurrence of an event in the electrical system has been identified, the method may proceed to block 415. Alternatively, if it is determined that at least one occurrence of an event in the electrical system has not been identified, the method may end, return to block 405 (e.g., for capturing additional energy-related signals(s) for analysis), or one or more actions may be taken. Example actions may include storing, displaying and/or analyzing the at least one captured energy-related signal. Additional exemplary actions may be appreciated from further discussions below.

At block 415, the energy-related data associated with the identified at least one occurrence of the event is analyzed to determine impact of the event on loads and/or zones associated with the electrical system. In accordance with some embodiments of this disclosure, at least one of measured magnitude and measured duration of the identified at least one occurrence of the event is compared to at least one of a reference magnitude and a reference duration to determine impact of the event on loads and/or zones associated with the electrical system. In response to determining that the impact exceeds an impact threshold, for example, it may be determined that part and/or all of the electrical system and/or its loads are affected by the identified at least one occurrence of the event. Some loads and/or zones, for example, may be more susceptible to energy-related issues/events than other loads and/or zones. In accordance with some embodiments of this disclosure, the loads may be automatically grouped into zones, for example, based upon historic analysis of past recovery characteristics, customer segment type(s), etc. The zones may be used, for example, in analysis of how electrical hierarchy is constructed in customer facility.

At block 420, the energy-related data associated with the identified at least one occurrence of the event is further analyzed to determine whether recovery from the event has been initiated or started for at least one of the loads and/or zones impacted by the event. The analysis may include, for example, evaluating the energy-related signals and/or data and/or other signals to characterize load(s), load type(s), and/or zone(s) being added during recovery, order of load(s), load type(s), and/or zone(s) being re-energized, missing load(s), load type(s), and/or zone(s), comparisons to historically similar event recovery characteristics, comparisons to recovery characteristics and/or baselines from similar or dissimilar market segments, etc.

If it is determined that recovery has been initiated or started, the method may proceed to block 425. Alternatively, if it determined that recovery is going to occur at a future time (e.g., at a prescribed time or in response to a user indicating that recovery is going to occur), the method may proceed to block 425 after the recovery has been initiated or started (i.e., after a waiting period). If it is determined that recovery has not been initiated or started (e.g., either immediately or at a future time), the method may end, return to block 405 (e.g., for capturing additional energy-related signals(s) for analysis), or one or more actions may be taken. As noted above, example actions may include storing, displaying and/or analyzing the at least one captured energy-related signal.

At block 425, in response to determining recovery has been initiated or started for at least one of the loads and/or zones impacted by the event, at least one load, load type, and/or zone recovering from the event may be determined.

At block 430, a recovery profile for the at least one load, load type, and/or zone may be determined.

Referring to blocks 425 and 430, in accordance with some embodiments of this disclosure, at least one of: the load, load type, and/or zone recovering from the event and the recovery profile for each of the loads, load types and/or zones is/are determined by identifying at least one of an new "running mode," an existing "running mode," changes in an existing and/or new "running mode," a temporary "stability," a temporary "instability," and a change in any electrical characteristic and/or control signal associated with the electrical system (e.g., harmonics, active power, status input/output, etc.). Additionally, in accordance with some embodiments of this disclosure, at least one of: the load, load type, and/or zone recovering from the event and the recovery profile for each of the loads, load types, and/or zones is/are determined based on an analysis of one or more types, parameters, and/or behaviors of data, the one or more types of data including time-series data logs, waveform captures, real-time data, I/O data, user input(s), etc.

In accordance with some embodiments of this disclosure, determining the load(s), load type(s), and/or zone(s) recovering from the event and the recovery profile for each load(s), load type(s), and/or zone(s), includes determining if one or more loads, load types, and/or zones, or a combination of load(s), load type(s), and/or zone(s), are recovering from the event.

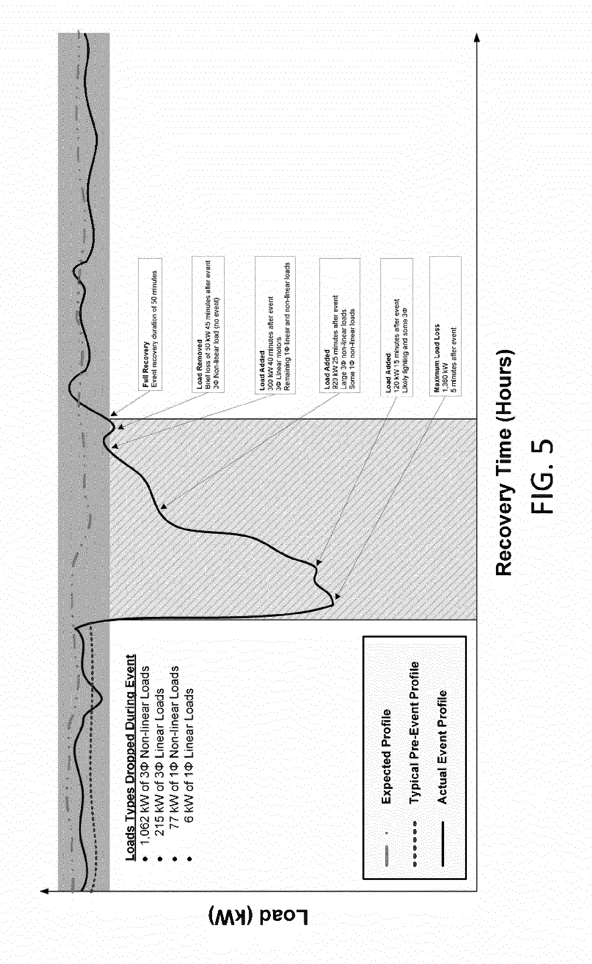

At block 435, the recovery profile for at least one of the loads, load types and/or zones and at least one of a load removal, load addition, load change, load type change and zone change (i.e., change within zones) within the electrical system is tracked and/or evaluated until recovery has met one or more recovery criteria (e.g., recovery is considered complete, satisfactory, prescribed or recommended time period has been met, etc.). The tracking and/or evaluation may include, for example, a recovery characteristic, behaviour, and/or parameter such a load(s), load type(s), and/or zone(s) profile, information, recovery time elapsed, status, etc. For example, as illustrated in FIG. 5, which is a plot showing an exemplary automated event recovery assessment in accordance with embodiments of this disclosure, the load types de-energized (or where energy consumption is reduced) during the example event are shown and tracked. These load types may include, for example, single-phase, phase-phase and/or three-phase loads, which may be linear and/or non-linear loads. As illustrated in the plot, the actual event profile is initially in line with the expected profile and typical pre-event profile. However, after the occurrence of the event, the actual event profile deviates from the expected profile. A variety of metrics may be tracked, for example, as shown in FIG. 5. These metrics may include, for example, maximum load loss, load(s) type added, load(s) type removed, and when a full, partial, and/or expected recovery has occurred.

As noted above, in some example implementations, the tracking (such as that shown in FIG. 5) occurs until recovery has met one or more recovery criteria. In accordance with some embodiments of this disclosure, the recovery criteria is considered met in response to at least one of: user feedback indicating the recovery criteria has been met, the recovery profile for at least one load, load type, and/or zone and/or the addition of the load, load type, and/or zone to the electrical system meeting one or more user defined and/or learned thresholds or definitions associated with and/or indicating a recovery, I/O signals from equipment/loads indicating the recovery, a heuristic evaluation, and a statistical evaluation of the recovery profile for each load(s), load type(s), and/or zone(s) and/or the addition of load(s), load type(s) and/or zone(s) to the electrical system indicating the recovery.

In accordance with some embodiments of this disclosure, the user defined and/or learned thresholds or definitions associated with and/or indicating a recovery have an associated or prescribed time period/duration. It is understood that the user(s) may arbitrarily end the recovery at any prescribed or non-prescribed time as well in accordance with some embodiments of this disclosure. It is also understood that the statistical evaluation of the recovery profile may use at least one of: relatively simple statistical methods (e.g., statistics based on distribution of data, such as standard deviations, percentiles, etc.), more sophisticated time-series analysis methodology (e.g., ARIMA, LSTM, etc.), more advanced shape/signal recognition (e.g., CNN, wavelets, etc.), fixed or dynamic timeboxing or a combination.

At block 440, at least one action may be taken or performed during and/or after the recovery from the event has met the recovery criteria to provide at least one of an indication (e.g., visual and/or audible indication, etc.), optimization or optimization recommendation, and feedback response (e.g., control signal(s), etc.) associated with the recovery from the event. For example, in accordance with some embodiments of this disclosure, the at least one action may include at least one of: providing indications of recovery duration(s), recovery success rate(s), percentage recovery, recovery means currently being implemented, etc. The at least one action may also include at least one of: an evaluation of the recovery, recommendation(s) for speeding up recovery, and other types of feedback on the recovery, etc. The feedback on the recovery may include, for example, dynamic (real-time) feedback during the recovery and/or historical feedback after the recovery.

The at least one action taken or performed at block 440 may additionally or alternatively include providing one or more alarms to indicate at least one of: 1) recovery from an event in progress/still in progress, 2) risk of new peak demand during or just after a recovery, 3) load(s) that have or have not been re-energized during recovery, 4) load type(s) that have or have not been re-energized during the recovery, 5) zone(s) which have or have not re-energized during the recovery, 6) excessive recovery time from event, etc.

It is understood that the above-discussed example actions are but a few of many possible example actions that may be taken. In accordance with some embodiments of this disclosure, the actions may be load(s) specific, load type(s) specific, zone(s) specific, event(s) specific, application(s) specific and/or customer(s) specific. For example, Semiconductor Fabrication facilities and Data Centers, which are two example customer types, may merit different action(s). It is understood that the action(s) (e.g., feedback on the recovery) may be initiated or started automatically, semi-automatically and/or in response to user input (i.e., be user-initiated action(s)).

At block 445, which is optional in some embodiments, one or more types of relevant information may be stored, for example, for future use and/or analysis. For example, profiles of recovery characteristics, decisions made during the recovery (e.g., early termination by the end-user of recovery tracking and/or consideration that a recovery is in progress), any relevant data related to and/or associated with at least one event, etc. may be stored. For example, with respect to the profiles of recovery characteristics, in one example implementation the recovery profile for at least one of the loads, load types and/or zones may be stored.

In embodiments in which relevant information is stored, it is understood that the relevant information may be stored locally (e.g., on at least one local storage device) and/or remotely (e.g., on cloud-based storage), for example, based on a user-configured preference. For example, a user may indicate their preference to store the relevant information locally and/or remotely in a user interface (e.g., of a user device), and the relevant information may be stored based on the user-configured preference. It is understood that the location(s) in which the relevant information is stored may be based on a variety of other factors including customer type(s)/segment(s), process(es), memory requirements, cost(s), etc.

It is also understood that the relevant information may be stored during any step of method 400 illustrated in Fig. 4. In other words, block 445 does not necessarily need to occur after block 440 as shown in Fig. 4. Rather, it may occur at one or more points during method 400.

Subsequent to block 445 (or block 440), the method may end in some embodiments. In other embodiments, the method may return to block 405 and repeat again (e.g., for capturing additional energy-related signals). In some embodiments in which the method ends after block 445 (or block 440), the method may be initiated again in response to user input, automatically, periodically, and/or a control signal, for example.

It is understood that method 400 may include one or more additional blocks or steps in some embodiments, as will be apparent to one of ordinary skill in the art. For example, in accordance with some embodiments of this disclosure, the method 400 may further include creating a list of recovery events (e.g., tracking data, load changes, load additions, load removals, zone changes, load or zone status, or other relevant events or inputs, etc.) to optimize recovery improvements and/or facilitate building a standard operating procedure(s) (SOP(s)) for recovery from an event. The SOP(s) may be built, for example, to optimize on various objectives such as peak demand reduction, billing reduction, recovery duration/time period, energy consumption during recovery, CO₂ emissions associated with recoveries, specific load or zone improvements, load type changes, technology changes, equipment or system protection, safety improvements, etc.

In accordance with further embodiments of this disclosure, the method 400 may additionally include performing analysis/action(s) on one or more lEDs for part (e.g., a zone) or the entirety of the electrical system. This may include, for example, changing configurations, logging interval rates, thresholds, load, load types, zone comprisal(s), updating baselines, etc.

In accordance with yet further embodiments of this disclosure, the method 400 may additionally include analyzing real-time recovery demand versus an existing peak demand minimize risk of inadvertently establishing a new peak demand for site(s) associated with the electrical system. For example, as electrical systems recover from voltage events, it is possible to bring the system back online in such a way that a new peak demand is established for this customer/end-user. This will result higher demand costs for the demand portion of the utility bills.

Other example aspects and advantages of the invention will be appreciated by one of ordinary skill in the art.

As described above and as will be appreciated by those of ordinary skill in the art, embodiments of the disclosure herein may be configured as a system, method, or combination thereof. Accordingly, embodiments of the present disclosure may be comprised of various means including hardware, software, firmware or any combination thereof.

It is to be appreciated that the concepts, systems, circuits and techniques sought to be protected herein are not limited to use in the example applications described herein (e.g., power monitoring system applications), but rather may be useful in substantially any application where it is desired to optimize waveform captures from one or more lEDs in an electrical system. While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the spirit and scope of the disclosure as defined in the appended claims.

Having described preferred embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

Accordingly, it is submitted that that scope of the patent should not be limited to the described embodiments but rather should be limited only by the spirit and scope of the following claims.

## Claims

1. A method for automatically assessing event recovery in an electrical system, comprising:
processing energy-related data from or derived from at least one energy-related signal captured by at least one Intelligent Electronic Device (IED) in the electrical system to identify at least one occurrence of an event in the electrical system;
analyzing the energy-related data associated with the at least one identified event to determine impact of the event on loads and/or zones associated with the electrical system, and whether recovery from the event has been initiated or started for at least one of the loads and/or zones impacted by the event;
in response to determining recovery from the event has been initiated or started for at least one of the loads and/or zones impacted by the event, determining at least one load, load type, and/or zone recovering from the event and a recovery profile for the at least one load, load type, and/or zone;
tracking the recovery profile for at least one of the loads, load types and/or zones and at least one of a load removal, load addition, load change, load type change and zone change within the electrical system until recovery has met one or more recovery criteria; and
performing at least one action during and/or after the recovery from the event has met the recovery criteria to provide at least one of an indication, optimization or optimization recommendation, and feedback response associated with the recovery from the event.

2. The method of claim 1, wherein at least one of: the load, load type, and/or zone recovering from the event and the recovery profile for each of the loads, load types and/or zones is/are determined by identifying at least one of an new "running mode," an existing "running mode," changes in an existing and/or new "running mode," a temporary "stability," a temporary "instability," and a change in any electrical characteristic and/or control signal associated with the electrical system, and/or
wherein at least one of: the load, load type, and/or zone recovering from the event and the recovery profile for each of the loads, load types, and/or zones is/are determined based on an analysis of one or more types, parameters, and/or behaviors of data, the one or more types of data including time-series data logs, waveform captures, real-time data, I/O data, user input(s), etc.

3. The method of claim 1, wherein the recovery criteria is considered met in response to at least one of: user feedback indicating the recovery criteria has been met, the recovery profile for at least one load, load type, and/or zone and/or the addition of the load, load type, and/or zone to the electrical system meeting one or more user defined and/or learned thresholds or definitions associated with and/or indicating a recovery, I/O signals from equipment/loads indicating the recovery, a heuristic evaluation, and a statistical evaluation of the recovery profile for each load(s), load type(s), and/or zone(s) and/or the addition of load(s), load type(s) and/or zone(s) to the electrical system indicating the recovery.

4. The method of claim 3, wherein the user defined and/or learned thresholds or definitions associated with and/or indicating a recovery have an associated or prescribed time period/duration, and/or
wherein the statistical evaluation uses at least one of: relatively simple statistical methods, more sophisticated time-series analysis methodology (e.g., ARIMA, LSTM, etc.), more advanced shape/signal recognition, fixed or dynamic timeboxing or a combination.

5. The method of claim 1, wherein determining the load(s), load type(s), and/or zone(s) recovering from the event and a recovery profile for each load(s), load type(s), and/or zone(s), includes: determining if one or more loads, load types, and/or zones, or a combination of load(s), load type(s), and/or zone(s), are recovering from the event, and/or
wherein the tracking includes a recovery characteristic, behavior, and/or parameter such a load(s), load type(s), and/or zone(s) profile, information, recovery time elapsed, status, etc.

6. The method of claim 1, further comprising:
creating a list of recovery events to optimize recovery improvements and/or facilitate building a standard operating procedure(s) (SOP(s)) for recovery from an event.

7. The method of claim 6, wherein the SOP(s) are built to optimize on various objectives such as peak demand reduction, billing reduction, recovery duration/time period, energy consumption during recovery, CO₂ emissions associated with recoveries, specific load or zone improvements, load type changes, technology changes, equipment or system protection, safety improvements, etc.

8. The method of claim 1, wherein the analysis includes evaluating energy signals and/or data and/or other signals to characterize load(s), load type(s), and/or zone(s) being added during recovery, order of load(s), load type(s), and/ or zone(s) being re-energized, missing load(s), load type(s), and/or zone(s), comparisons to historically similar event recoveries, comparisons to recovery characteristics and/or baselines from similar or dissimilar market segments, etc., or wherein the energy-related data further includes at least one of digital and/or analog I/O data, user-input data, PLC data, other control signals, etc., or
wherein the feedback includes dynamic (real-time) feedback during the recovery and/or historical feedback after the recovery.

9. The method of claim 1, further comprising:
performing analysis/action(s) on one or more lEDs for part (e.g., a zone) or the entirety of the electrical system, or
storing relevant information for future use and/or analysis.

10. The method of claim 1, wherein real-time recovery demand versus an existing peak demand is analyzed to minimize risk of inadvertently establishing a new peak demand for at least one of an application, process, zone, and the entire electrical system associated with a site(s), or wherein the at least one captured energy-related signal is associated with at least one load, load type, and/or zone in the electrical system.

11. The method of claim 1, further comprising:
automatic grouping of loads into zones based upon historic analysis of at least one previous recovery, customer segment type(s), etc.; and
analyzing recovery information acquired from load(s), load type(s), and/or zone(s) behavior to determine at least part of how an electrical hierarchy is constructed within the electrical system, or
providing alarms to indicate at least one of: 1) recovery from an event in progress/still in progress, 2) risk of new peak demand during or just after a recovery, 3) load(s) that have or have not been re-energized during recovery, 4) load type(s) that have or have not been re-energized during the recovery, 5) zone(s) which have or have not re-energized during the recovery, 6) excessive recovery time from event, and 7) magnitude/amount of load that has been recovered (relative or absolute) with respect to pre-event parameters.

12. The method of claim 1, wherein the at least one action is load(s) specific, load type(s) specific, zone(s) specific, event(s) specific, application(s) specific and/or customer(s) specific, or wherein the at least one identified event occurrence is indicative of an anomalous condition in the electrical system, or
wherein characteristics and/or behaviors suitable for identifying the at least one identified event occurrence include at least one of: magnitude; duration; frequency components; sag type; phase(s) impacted; phase angle(s); a combination of the magnitude, the duration, the associated frequency components, the sag type with associated phase angle(s); and other relevant information associated with the at least one captured energy-related signal.

13. The method of claim 1, wherein the at least one captured energy-related signal includes at least one of: a voltage signal, a current signal, and another signal and/or data derived from the any one the voltage signal and/or the current signal.

14. The method of claim 13, wherein the voltage signal and the current signal are at least one of: a single-phase voltage and current signal, and a polyphase voltage and current signal.

15. A system for automatically assessing event recovery in an electrical system, comprising:
at least one processor;
at least one memory device coupled to the at least one processor, the at least one processor and the at least one memory device configured to:
process energy-related data from or derived from at least one energy-related signal captured by at least one Intelligent Electronic Device (IED) in the electrical system to identify at least one occurrence of an event in the electrical system;
analyze the energy-related data associated with the at least one identified event occurrence to determine impact of the event on loads and/or zones associated with the electrical system, and whether recovery from the event has been initiated or started for at least one of the loads and/or zones impacted by the event;
in response to determining recovery from the event has been initiated or started for at least one of the loads and/or zones impacted by the event, determine at least one load, load type, and/or zone recovering from the event and a recovery profile for the at least one load, load type, and/or zone;
track the recovery profile for at least one of the loads, load types and/or zones and at least one of a load removal, load addition, load change, load type change and zone change within the electrical system until recovery has met one or more recovery criteria; and
perform at least one action during and/or after the recovery from the event has met the recovery criteria to provide at least one of an indication, optimization or optimization recommendation, and feedback response associated with the recovery from the event.
